Europäisches Patentamt

European Patent Office

Office européen des brevets

(19)

(11) **EP 0 917 298 B1**

## (12) FASCICULE DE BREVET EUROPEEN

(45) Date de publication et mention
de la délivrance du brevet:
**03.05.2006 Bulletin 2006/18**

(51) Int Cl.:
**H04B 1/707** (2006.01)

(21) Numéro de dépôt: **98402606.2**

(22) Date de dépôt: **20.10.1998**

(54) **Récepteur différentiel à étalement de spectre par séquence directe avec moyens mixtes de formation d'un signal d'interférences**

Differentieller Direktsequenzspreizspektrumempfänger mit gemischter Störsignalerzeugungsvorrichtung

Differential direct sequence spread spectrum receiver with mixed interference signal generation means

(84) Etats contractants désignés:
**DE GB IT**

(30) Priorité: **22.10.1997 FR 9713239**

(43) Date de publication de la demande:
**19.05.1999 Bulletin 1999/20**

(73) Titulaire: **COMMISSARIAT A L'ENERGIE ATOMIQUE**
**75015 Paris (FR)**

(72) Inventeurs:
• **Lattard, Didier**
**38680 Rencurel (FR)**

• **Lequepeys, Jean-René**
**38600 Fontaine (FR)**
• **Varreau, Didier**
**38450 Saint-Georges-de-Commiers (FR)**
• **Daniele, Norbert**
**38330 Montbonnot (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 491 668       EP-A- 0 778 677**
**US-A- 5 553 062**

**Description**

**DESCRIPTION**

**Domaine technique**

La présente invention a pour objet un récepteur différentiel à étalement de spectre par séquence directe avec moyens mixtes de formation d'un signal d'interférences correspondant au bruit d'accès multiple.

**Etat de la technique**

La technique de modulation à étalement de spectre par séquence directe est utilisée depuis de nombreuses années, en particulier dans les radiocommunications avec les satellites et dans le domaine militaire.

Dans un émetteur de données numériques utilisant une technique de modulation classique, les données à émettre modulent une porteuse radio. La modulation employée peut être une modulation de phase, de fréquence ou d'amplitude ou une modulation mixte. Pour simplifier l'exposé, on se limitera aux modulations de phase, qui sont aujourd'hui les plus utilisées.

Les données numériques à transmettre sont des éléments binaires, ou bits. Ces bits ont une période $T_b$, c'est-à-dire que tous les $T_b$ il faut transmettre un nouveau bit. Avec ces bits, on peut constituer des groupes de bits, appelés encore symboles, dont la période est notée $T_s$ et est un multiple de $T_b$. Ce sont ces symboles qui vont moduler la porteuse radio, par exemple en phase.

Deux exemples de modulation de phase peuvent illustrer cette technique :

a) la modulation dite BPSK (pour "Binary Phase Shift Keying") ; elle consiste à affecter un état de phase, par exemple 0, aux bits 0, et un état de phase $\pi$ aux bits 1 ; dans ce cas, le symbole est le bit lui-même ($T_s=T_b$) et la porteuse radio voit son état de phase imposé tous les bits ;

b) la modulation dite QPSK (pour "Quaternary Phase Shift Keying") ; elle consiste à utiliser des symboles formés par deux bits successifs ; ces symboles peuvent donc prendre quatre états (00, 01, 10, 11) ; on affecte un état de la phase de la porteuse à chacun de ces états ; dans ce cas, $T_s=2T_b$ et la porteuse radio voit son état de phase imposé tous les deux bits.

Côté réception, il faut démoduler le signal reçu. On distingue deux grandes familles de démodulation : la démodulation cohérente et la démodulation non cohérente. La technique de démodulation cohérente consiste à réaliser, dans le récepteur, un sous-ensemble dont le rôle est d'estimer la phase moyenne de la porteuse, de manière à reconstituer une référence de phase. Cette référence de phase est ensuite mélangée avec le signal reçu pour démoduler les données.

La technique de démodulation non cohérente est fondée sur l'observation selon laquelle il suffit que la référence de phase du symbole en cours soit comparée à la phase du symbole précédent. Dans ce cas, le récepteur n'estime pas la phase des symboles mais la différence de phase entre deux symboles successifs. On se trouve alors en présence d'une modulation différentielle de phase DPSK ("Differential Phase Shift Keying") ou DQPSK ("Differential Quadrature Phase Shift Keying").

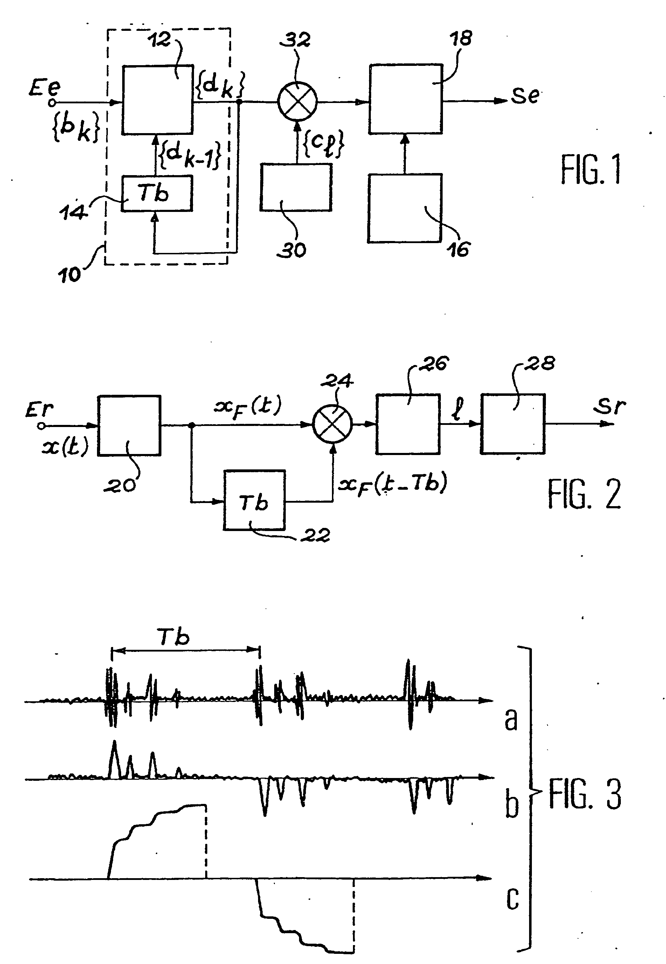

Les figures 1 à 3 annexées montrent schématiquement la structure et le fonctionnement d'un émetteur et d'un récepteur à étalement de spectre fonctionnant en DPSK. Cet état de la technique correspond au document FR-A-2 712 129.

La figure 1, tout d'abord, montre le schéma synoptique d'un émetteur. Cet émetteur possède une entrée Ee, qui reçoit les données $b_k$ à émettre et il comprend un codeur différentiel 10, composé d'un circuit logique 12 et d'un circuit à retard 14 ; l'émetteur comprend encore un générateur 30 de séquences pseudoaléatoires, un multiplieur 32, un oscillateur local 16 et un modulateur 18 relié à une sortie Se, qui délivre le signal DPSK.

Le circuit logique 12 reçoit les données binaires $b_k$ et délivre des données binaires $d_k$. Le circuit logique 12 reçoit également les données retardées d'un rang soit $d_{k-1}$. L'opération logique effectuée dans le circuit 12 est l'opération OU-exclusif sur les données $b_k$ et sur le complément de $d_k$ retardé (c'est-à-dire sur $\overline{d_{k-1}}$) :

$$d_k = b_k \oplus \overline{d_{k-1}}$$

La séquence pseudoaléatoire utilisée à l'émission pour moduler les données doit posséder une fonction d'autocorrélation présentant un pic marqué (de valeur N) pour un retard nul et des lobes secondaires le plus faible possible. Ceci peut être obtenu en utilisant des séquences de longueur maximale (appelées aussi m-séquences) ou des séquences dites de GOLD ou de KASAMI par exemple. Cette séquence pseudoaléatoire, notée {C}, possède un débit binaire N fois plus élevé que le débit des données binaires à transmettre. La durée $T_c$ d'un élément binaire de cette séquence pseudoaléatoire, élément appelé aussi "chip", est donc égale à $T_b/N$.

Le débit en "chips" de la séquence pseudoaléatoire peut être de plusieurs millions, voire de plusieurs dizaines de millions par seconde.

La figure 2 annexée montre le schéma synoptique d'un récepteur correspondant, du type démodulateur différentiel. Ce récepteur possède une entrée Er et comprend un filtre adapté 20, dont la réponse impulsionnelle est la renversée dans le temps de la séquence pseudoaléatoire utilisée dans l'émetteur, un circuit à retard d'une durée $T_b$ référencé 22, un multiplieur 24, un intégrateur 26 sur une période $T_b$ et un circuit logique de décision 28. Le récepteur possède une sortie Sr qui restitue les données.

Si l'on note x(t) le signal appliqué à l'entrée Er, le multiplieur 24 reçoit le signal filtré $x_F(t)$ et le signal filtré-retardé $x_F(t-T_b)$. Le produit est intégré sur une période inférieure ou égale à $T_b$ dans l'intégrateur 26, lequel délivre un signal dont la polarité permet de déterminer la valeur du bit transmis.

Le filtre d'entrée 20 utilisé dans le récepteur possède une réponse impulsionnelle équivalente en bande de base, notée H(t), et cette réponse doit être le complexe conjugué renversé dans le temps de la séquence pseudoaléatoire c(t) utilisée à l'émission :

$$H(t) = c*(T_b - t)$$

Le signal délivré par un tel filtre vaut donc :

$$x_F(t) = x(t) * H_F(t)$$

où le signe * désigne l'opération de convolution, soit

$$x_F(t) = \int_0^{T_b} x(s).c*(s-t)ds.$$

Le filtre adapté 20 réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel, la fréquence de répétition des impulsions étant égale à $1/T_b$. L'enveloppe de ce signal est la fonction d'autocorrélation du signal c(t). L'information est véhiculée par la différence de phase entre deux pics de corrélation successifs.

La sortie du multiplieur va donc être formée d'une succession de pics positifs ou négatifs, suivant la valeur du bit transmis.

Dans le cas d'une transmission radio en présence de trajets multiples, la sortie du filtre adapté va être formée d'une succession de pics de corrélation, chaque pic correspondant à un trajet de propagation.

Les différents signaux de la chaîne de réception sont représentés sur la figure 3. La ligne (a) représente le signal filtré $x_F$ (t) ; la ligne (b) le signal de corrélation $x_F(t)*x_F(t-T_b)$ ; la ligne (c) le signal à la sortie de l'intégrateur.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communications Series ;
- "Spread Spectrum Communications", par Marvin K. SIMON et al., vol. I, 1983, Computer Science Press ;
- "Spread Spectrum Systems", par R.C. DIXON, John WILEY and Sons..

Cette technique est également décrite dans certains articles :

- "Direct-sequence Spread Spectrum with DPSK Modulation and Diversity for Indoor Wireless Communications", publié par Mohsen KAVEHRAD et Bhaskar RAMAMURTHI dans la revue "IEEE Transactions on Communications", vol. COM 35, n˚2, février 1987 ;

- Practical Surface Acoustice Wave Devices", par Melvin G. HOLLAND, dans la revue Proceedings of the IEEE, vol. 62, n˚5, mai 1974, pp. 582-611.

Les avantages de la technique à étalement de spectre par séquence directe sont multiples. On peut citer, notamment :

- la discrétion : cette discrétion est liée à l'étalement de l'information transmise sur une large bande de fréquence ; il en résulte une faible densité spectrale de la puissance émise ;
- l'accès multiple : plusieurs liaisons à étalement de spectre par séquence directe peuvent partager la même bande de fréquence en utilisant des séquences pseudoaléatoires d'étalement orthogonales (séquences possédant une fonction d'intercorrélation qui présente du bruit résiduel très faible pour tous les décalages) ; cette technique porte le nom d'accès multiple à répartition par les codes (AMRC en abrégé ou CDMA en anglais) ;
- une bonne cohabitation avec les communications à bande étroite classique : en effet, la même bande de fréquence peut être partagée par les systèmes utilisant une modulation à bande étroite et ceux qui utilisent une modulation à large bande ; les communications à bande étroite ne voient qu'une légère augmentation du bruit radioélectrique ambiant, d'autant plus faible que la longueur de la séquence sera grande ; les communications à modulation à étalement de spectre opèrent une réjection des modulations à bande étroite grâce à l'opération de corrélation effectuée à la réception ;
- la difficulté d'interception : une transmission à étalement de spectre par séquence directe est difficile à intercepter en raison de la faible densité spectrale et du fait que le récepteur doit connaître la séquence d'étalement pour pouvoir démoduler les données ;
- un excellent comportement dans un environnement multi-trajet : dans ce type d'environnement, la propagation de l'onde radioélectrique s'effectue selon des trajets multiples qui mettent en jeu des phénomènes de réflexion, de diffraction et de diffusion ; en outre, il n'est pas rare qu'il n'y ait plus de trajet direct stable dans le temps entre l'émetteur et le récepteur ; cette propagation par trajets multiples induit des effets parasites qui tendent à dégrader la qualité de la transmission.

Les systèmes de transmission à accès multiple à répartition par les codes (AMRC) se heurtent à une difficulté, qui vient de l'interférence se produisant entre une voie de transmission utilisant un code d'étalement propre à un utilisateur particulier et les autres voies utilisant d'autres codes propres à d'autres utilisateurs. Si les séquences utilisées étaient rigoureusement orthogonales, ces interférences seraient inexistantes mais, dans la pratique, ce n'est pas le cas.

Si l'on désigne par $g_i(t)$ et $g_k(t)$ deux séquences pseudo-aléatoires affectées à des utilisateurs i et k, on peut définir un coefficient $\mu_{i,k}$ traduisant la corrélation entre ces deux séquences. Ce coefficient est égal à la moyenne, sur la durée Ts d'un symbole, du produit des séquences, soit :

$$\mu_{i,k} = \frac{1}{Ts}\int_o^{Ts} g_i(t).g_k(t)dt \ .$$

Ce coefficient représente une autocorrélation si i=k et une intercorrélation si i≠k.

Le signal à la sortie du corrélateur correspondant à l'utilisateur de rang k (c'est-à-dire la sortie du multiplieur 24 de la figure 2) peut s'écrire, en fonction de ce coefficient de couplage, :

$$A_k d_k + \sum_i \mu_{i,k} A_i d_i + \frac{1}{Ts}\int_o^{Ts} n(t).g_k(t).dt$$

où $A_k$ est l'amplitude du signal propre à l'utilisateur de rang k, $g_k(t)$ la séquence pseudo-aléatoire propre à cet utilisateur, di la donnée transmise et n(t) un bruit blanc additif gaussien. Dans cette expression, l'indice i va de 0 à K, K étant le nombre total d'utilisateurs, mais sans prendre la valeur k propre à l'utilisateur considéré.

Le premier terme, soit $A_k d_k$, permet de retrouver la donnée $d_k$ ; le deuxième correspond à une corrélation avec les signaux correspondant aux autres utilisateurs. Ce terme est appelé "interférence d'accès multiple" ou IAM en abrégé (MAI en anglais pour "Multiple Access Interference"). Si les séquences sont choisies et construites pour avoir des intercorrélations faibles, les coefficients $u_{i,k}$ sont proches du zéro et l'effet de l'interférence sur le signal de l'utilisateur k avec les autres utilisateurs i reste faible.

L'existence de cette interférence d'accès multiple entraîne une conséquence non négligeable sur la capacité du système de transmission, c'est-à-dire sur le nombre d'utilisateurs simultanés acceptables, et sur les performances du système. De plus, la présence d'utilisateurs émettant un fort signal va augmenter l'effet de l'interférence d'accès multiple sur des utilisateurs émettant un signal faible. Les utilisateurs émettant faiblement pourront être complètement brouillés par des utilisateurs de plus forte puissance. Par exemple, dans des communications de multi-point à point, ce phénomène survient lorsque les émetteurs, émettant avec des amplitudes identiques, sont à des distances différentes du récepteur. Le signal de l'émetteur le plus proche arrivera au récepteur avec une amplitude plus forte que le signal émanant d'un émetteur plus lointain, compte-tenu des différences d'atténuation. Cet effet est connu sous le nom de "Near/Far Effect" en terminologie anglo-saxonne, ou aveuglement en bande de base.

De nombreux travaux ont été entrepris pour tenter de réduire ce phénomène d'interférence. On peut citer :

- des travaux sur les séquences d'étalement pseudo-aléatoires : cette approche vise à trouver un jeu de séquences possédant de bonnes propriétés d'orthogonalité ; dans le cas idéal où $\mu_{i,k}=0$ (pour i différent de k), les codes sont rigoureusement orthogonaux et le terme correspondant à l'interférence d'accès multiple est nul ; cependant, comme en pratique les systèmes de communications CDMA sont asynchrones, il est mathématiquement impossible de garantir cette orthogonalité pour des décalages temporels variables entre chaque utilisateur du système ; en pratique, on recherche donc des codes ayant entre eux les plus faibles coefficients d'intercorrélation ;

- des travaux sur la gestion des puissances : un contrôle strict de la puissance d'émission des différents utilisateurs du système vise à obtenir que les puissances reçues, au niveau du récepteur, soient identiques pour tous les codes du système CDMA ; cette gestion limite le "Near/Far Effect" ; cependant, du fait du phénomène d'atténuation et de variations rapides du canal radio, ce contrôle des puissance a ses limites ;

- la mise en oeuvre d'antennes adaptatives : l'idée est de pointer l'antenne dans la direction de l'utilisateur recherché ; l'effet de l'interférence d'accès multiple est alors réduit ;

- des travaux sur des structures de récepteur plus performantes fondées sur une détection multi-utilisateurs conjointe des données ; la seule hypothèse faite est que les codes du système sont connus du récepteur ; malheureusement, cette structure théorique est très complexe à mettre en oeuvre.

Les efforts de ces dernières années ont porté sur la recherche de solutions qui, pour n'être pas optimales, n'en apportent pas moins une nette amélioration des performances par rapport à celles d'un détecteur classique. Parmi ces solutions, on peut citer les récepteurs à suppression d'interférences. Deux types de récepteurs peuvent être distingués, selon qu'ils mettent en oeuvre une suppression successive ou une suppression parallèle des interférences. Ces deux types de récepteurs connus peuvent être décrits rapidement :

A) Un récepteur à suppression successive d'interférences comprend schématiquement :

- un récepteur du signal en bande de base,

- un premier étage utilisant sur un détecteur conventionnel,

- un circuit de sélection de l'utilisateur produisant la plus forte valeur de corrélation (utilisateur reçu avec la plus forte puissance),

- un décodage des informations liées à cet utilisateur pour restituer le symbole émis,

- une régénération du signal bande de base émis par cet utilisateur par étalement du symbole restitué à l'aide de la séquence d'étalement utilisée,

- une suppression du signal ainsi régénéré dans le signal en bande de base initial,

- une réitération de ce processus (avec le nouveau signal en bande de base obtenu) jusqu'au décodage du signal de plus faible puissance.

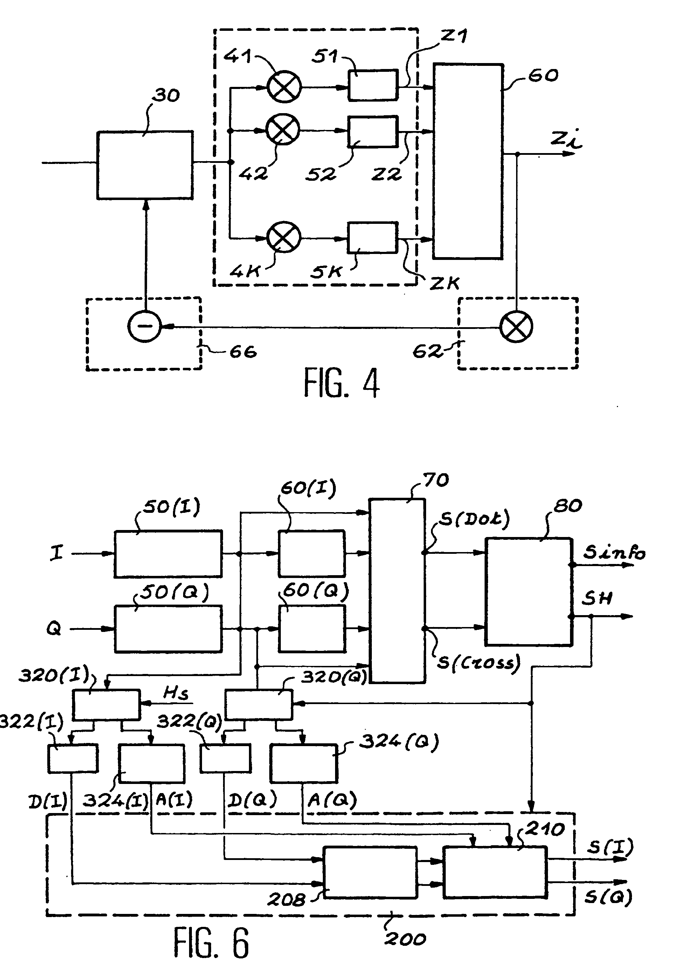

Une telle technique est décrite, par exemple, dans l'article de P. PATEL et al. intitulé "Analysis of a Simple Successive Interference Cancellation Scheme in a DS/CDMA System" publié dans "IEEE Journal on Selected Areas in Communications", vol. 12, n˚5, June 1994, pp. 796-807. Le récepteur correspondant est illustré sur la figure 4 annexée. Il comprend un circuit 30 de réception en bande de base, un ensemble de corrélateurs 41, 42, ..., 4k, autant d'intégrateurs 51, 52, ..., 5k, un circuit 60 de sélection du maximum des signaux $Z_1$, $Z_2$, ..., $Z_k$, obtenus après intégration, soit $Z_i$, la donnée di correspondante étant obtenue par le signe de $Z_i$, un circuit 62 de régénération du signal en bande de base, ce circuit utilisant la séquence pseudo-aléatoire de l'utilisateur i pour réétaler la donnée di, un circuit inverseur 66 réinjectant le signal en bande de base ainsi obtenu dans le circuit de réception, pour y soustraire la part liée à l'utilisateur i.

Après ce premier traitement, le circuit détermine un nouveau maximum et effectue une nouvelle correction et ainsi de suite.

Ce processus de suppression d'interférences est bien adapté aux cas où les puissances relatives des divers utilisateurs ont des valeurs très différentes. En effet, dans ce cas, c'est l'utilisateur qui est reçu avec la plus forte puissance qui est le plus facile à décoder et c'est aussi celui qui perturbe le plus les autres utilisateurs.

B) Pour ce qui est maintenant des récepteurs à suppression parallèle d'interférences, ils utilisent :

- un premier étage fondé sur un détecteur classique (banque de corrélateurs),
- une génération d'un signal d'interférence par chacun des utilisateurs du système,
- pour chacun des utilisateurs, la suppression dans le signal reçu de toutes les interférences engendrées par les autres utilisateurs du système,
- un deuxième étage de corrélateurs et d'estimation des données finales.

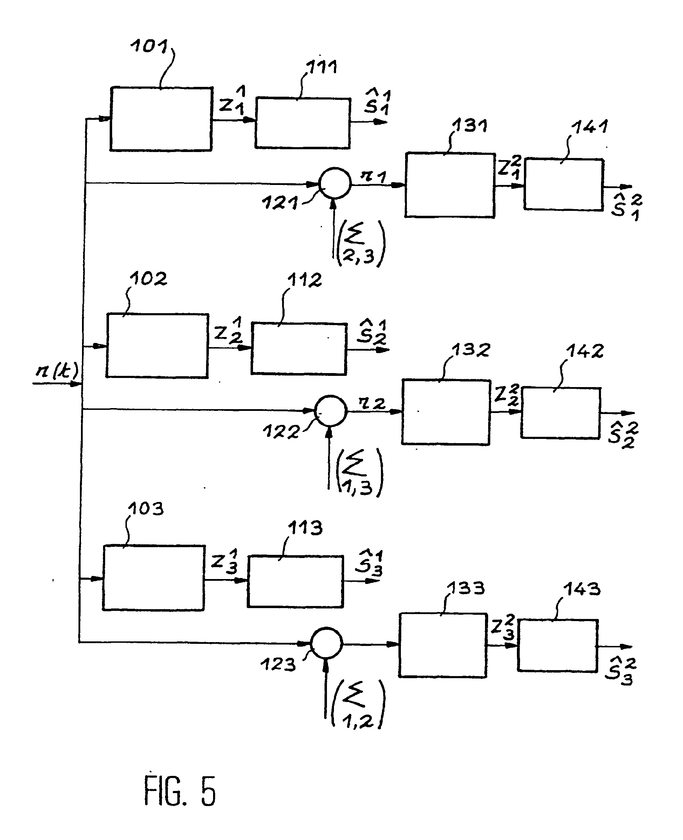

Une telle technique est décrite dans l'article de R.M. BUEHRER et al. intitulé "Analysis of DS-CDMA Parallel Interference Cancellation with Phase and Timing Errors" publié dans "IEEE Journal on Selected Areas in Communications", vol. 14, n˚8, October 1996, pp. 1522-1535. Le récepteur correspondant est illustré sur la figure 5 annexée, dans le cas de trois utilisateurs. Le signal de réception r(t) est traité dans un premier étage constitué de trois corrélateurs 101, 102, 103 utilisant les trois codes pseudo-aléatoires des utilisateurs. Ces corrélateurs délivrent trois signaux de décision $Z_1^1$, $Z_2^1$, $Z_3^1$ qui sont traités dans trois circuits d'estimation 111, 112, 113. Ces derniers délivrent des signaux $\hat{s}_1^1$, $\hat{s}_2^1$, $\hat{s}_3^1$ qui sont obtenus par étalement des signaux Z par les séquences pseudo-aléatoires des trois utilisateurs et par pondération en fonction des puissances respectives détectées. Pour chaque utilisateur, les signaux $\hat{s}$ des autres utilisateurs sont sommés, soit respectivement $\sum_{2,3}$ pour l'utilisateur 1, $\sum_{1,3}$ pour l'utilisateur 2 et $\sum_{1,2}$ pour l'utilisateur 3. Ces sommes sont soustraites du signal de réception r(t) dans un deuxième étage constitué par trois soustracteurs 121, 122, 123, pour obtenir trois nouveaux signaux $r_1$, $r_2$, $r_3$ lesquels vont à leur tour être corrélés avec les séquences pseudo-aléatoires des utilisateurs, respectivement dans trois corrélateurs 131, 132, 133. On obtient ainsi, dans ce deuxième étage, trois nouveaux signaux de décision $Z_1^2$, $Z_2^2$, $Z_3^2$, auxquels on fait correspondre trois signaux étalés par les séquences pseudo-aléatoires correspondantes, soit $\hat{s}_1^2$, $\hat{s}_2^2$, $\hat{s}_3^2$ et ainsi de suite ...

Ce processus de suppression parallèle des interférences, contrairement au processus précédent, est bien adapté aux cas où les puissances relatives des divers utilisateurs sont de valeurs sensiblement égales.

D'une manière générale, pour construire un signal de correction d'interférences d'accès multiple, on a besoin de trois informations :

- une horloge symbole (Hs),
- les données binaires des voies I et Q, soit D(I), D(Q),
- les amplitudes des signaux sur les voies I et Q, soit A(I) et A(Q).

Dans l'état de la technique antérieure, une distinction très nette s'opère entre les techniques à modulation cohérente, jugées plus performantes et les techniques à modulation non cohérente, réputées plus facile à mettre en oeuvre. Cette distinction se retrouve dans les moyens de correction des interférences d'accès multiple. En l'occurrence, ces moyens sont tous basés sur une détection de type cohérent, comme c'est le cas pour les deux exemples qui viennent d'être décrits à propos des figures 4 et 5.

La présente invention rompt avec cette distinction en ce sens que, pour obtenir les signaux nécessaires à la formation d'un signal d'interférences correspondant au bruit d'accès multiple, elle préconise d'utiliser à la fois la partie non cohérente du récepteur, à savoir les moyens de démodulation différentielle, et la partie cohérente de celui-ci, à savoir les deux filtres adaptés effectuant les corrélations. On obtient ainsi un signal d'horloge-symbole (Hs) à partir d'une démodulation non cohérente, en l'occurrence différentielle, et cette horloge, obtenue de cette manière, est très fiable et précise. Cet avantage est particulièrement important pour des applications en environnement à trajets multiples avec plusieurs utilisateurs. Le signal de correction d'interférence qui sera engendré à partir d'un tel signal d'horloge sera correctement synchronisé avec les données initiales quand on effectuera la soustraction dans l'étage suivant. Quant aux données D(I), D(Q) et aux amplitudes A(I), A(Q) nécessaires à la formation du signal de correction, elles seront obtenues à partir des moyens cohérents du récepteur, c'est-à-dire, en pratique, à partir des filtres adaptés (ou corrélateurs).

En d'autres termes, les moyens de correction d'interférences d'accès multiples sont mixtes, ou composites, en ce sens qu'ils sont en partie fondés sur un processus cohérent et en partie sur un processus non cohérent.

**Exposé de l'invention**

De façon précise, la présente invention a pour objet un récepteur différentiel à étalement de spectre par séquence directe, avec moyens mixtes de formation de signaux de commande pour la formation d'un signal d'interférences correspondant au bruit d'accès multiple, ce récepteur comprenant :

a) une première voie de traitement d'une première partie (I) du signal reçu, cette première partie étant la partie en phase avec la porteuse reçue, cette première voie comprenant :

i) des premiers moyens de filtrage adapté correspondant à une séquence pseudoaléatoire particulière, ces premiers moyens délivrant un premier signal filtré ($I_k$) ,
ii) des premiers moyens de retard, délivrant un premier signal filtré-retardé ($I_{k-1}$),

b) une seconde voie de traitement recevant d'une seconde partie (Q) du signal reçu, cette seconde partie étant la partie en quadrature de phase avec la porteuse reçue, cette seconde voie comprenant :

i) des seconds moyens de filtrage adapté correspondant à ladite séquence pseudoaléatoire particulière, ces seconds moyens délivrant un second signal filtré ($Q_k$),
ii) des seconds moyens de retard, délivrant un second signal filtré-retardé ($Q_{k-1}$),

c) un circuit de démodulation recevant les premiers signaux filtré et filtré-retardé ($I_k$, $I_{k-1}$) et les seconds signaux filtré et filtré-retardé ($Q_k$, $Q_{k-1}$), ce circuit comprenant des moyens pour calculer un signal "Dot" égal à ($I_k I_{k-1}+Q_k Q_{k-1}$) et un signal "Cross" égal à ($Q_k I_{k-1}-I_k Q_{k-1}$),
d) un circuit d'intégration et de régénération d'horloge symbole (Hs) recevant les signaux "Dot" et "Cross" et délivrant un signal d'horloge symbole (Hs),
ce récepteur étant caractérisé par le fait qu'il comprend en outre :
e) des moyens mixtes de formation de signaux de commande, ces signaux étant constitués par un signal d'horloge (H) issu du circuit de démodulation et par des données (D(I), D(Q)) et des amplitudes (A(I), A(Q)) issues des moyens de filtrage adapté,
f) un circuit (200) de formation d'un signal d'interférences correspondant au bruit d'accès multiple, ce circuit étant commandé par lesdits signaux de commande (H, D(I), D(Q), A(I), A(Q)), lesdits moyens mixtes de formation de signaux de commande comprennent :

-    un premier registre relié à la sortie des premiers moyens de filtrage adapté de la première voie et commandé par le signal d'horloge-symbole (Hs) délivré par le circuit de régénération d'horloge, ce premier registre possédant une sortie,
-    un second registre relié à la sortie des premiers moyens de filtrage adapté de la seconde voie et commandé par le signal d'horloge-symbole (Hs) délivré par le circuit de régénération d'horloge, ce second registre possédant une sortie,
-    un premier détecteur de signe relié à la sortie du premier registre et délivrant une première donnée (D(I)) propre à la première voie,
-    un second détecteur de signe relié à la sortie du second registre et délivrant une seconde donnée (D(Q)) propre à la seconde voie,
-    un premier circuit de détermination de la valeur absolue (A(I)) du signal délivré par la sortie du premier registre,
-    un second circuit de détermination de la valeur absolue du signal D(Q)) délivré par la sortie du second registre.

De préférence le circuit de formation d'un signal d'interférences correspondant au bruit d'accès multiple comprend :

- des moyens d'étalement de spectre par séquence pseudo-aléatoire, ces moyens étant reliés aux sorties des premier et second détecteurs de signe ;

- un circuit d'amplification et d'inversion des signaux délivrés par les moyens d'étalement de spectre, ce circuit d'amplification et d'inversion possédant deux entrées de commande de gain reliées respectivement aux sorties des premier et second circuits de détermination de valeur absolue, ce circuit d'amplification et d'inversion délivrant deux signaux de correction en bande de base.

Le récepteur qui vient d'être défini est capable de produire un signal de correction des interférences d'accès multiple. Pour effectuer cette correction, il reste à soustraire du signal incident le signal de correction. Mais, comme l'élaboration de ce dernier nécessite un certain temps, la soustraction ne peut se faire que sur un signal incident convenablement retardé. Le récepteur comprend donc, de manière avantageuse, un tel moyen de retarder le signal incident, pour le mettre en synchronisme avec le signal de correction.

La demande a également pour objet un récepteur différentiel à étalement de spectre par séquence directe, caractérisé en ce qu'il comprend une pluralité de récepteurs tels qu'ils viennent d'être définis, ces récepteurs étant groupés en parallèle dans plusieurs étages mis en cascade, les récepteurs d'un même étage travaillant chacun sur une séquence pseudo-aléatoire déterminée, les récepteurs de même rang dans des étages différents travaillant avec la même séquence pseudo-aléatoire, les sorties des moyens de formation du signal de correction d'interférences d'accès multiple d'un récepteur de rang déterminé d'un étage particulier étant reliées aux entrées des sommateurs des récepteurs de rang différent dans l'étage suivant, les sorties du moyen de retard du récepteur d'un étage particulier étant reliée aux entrées des sommateurs du récepteur de même rang dans l'étage suivant.

**Brève description des dessins**

- la figure 1, déjà décrite, est un schéma synoptique d'un émetteur connu à étalement de spectre ;
- la figure 2, déjà décrite, est un schéma synoptique d'un récepteur connu à étalement de spectre ;
- la figure 3, déjà décrite, illustre le fonctionnement général d'un récepteur tel que celui de la figure 2 ;
- la figure 4, déjà décrite, illustre un processus connu de corrections successives d'interférences d'accès multiple,
- la figure 5, déjà décrite, illustre un processus connu de corrections parallèles d'interférences d'accès multiple,
- la figure 6 montre la structure générale d'un récepteur conforme à l'invention ;
- la figure 7 montre un exemple de mise en oeuvre du récepteur de l'invention dans un composant récepteur ;
- la figure 8 illustre un circuit récepteur avec correction parallèle des interférences, ce circuit utilisant plusieurs composants tels que celui de la figure 7 ;
- la figure 9 montre le signal à la sortie du premier étage du circuit de la figure 8 ;
- la figure 10 montre le signal obtenu après l'étage de correction des interférences d'accès multiple.

**Exposé détaillé de modes de réalisation**

Avant de décrire certains modes particuliers de réalisation de l'invention, il est utile de faire quelques rappels sur la nature des signaux traités dans les récepteurs à étalement de spectre.

On considère une porteuse de pulsation w, modulée en phase par une fonction du temps P(t). Le signal modulé peut s'écrire :

$$s(t) = A(t)\cos\left[wt + P(t)\right]$$

où A(t) est l'amplitude du signal.

Cette expression peut se développer en :

$$s(t) = A(t)\cos wt \cos P(t) - A(t)\sin wt \sin P(t)$$

En notant I(t) la partie A(t)cosP(t), qui est en phase avec la porteuse et Q(t) la partie A(t)sinP(t), qui est en quadrature avec la porteuse, on peut encore écrire ce dernier signal sous la forme :

$$s(t) = I(t)\cos wt - Q(t)\sin wt$$

Il est commode alors de considérer le signal complexe S(t) :

$$S(t) = U(t)\exp(jwt)$$

avec U(t)=I(t)+jQ(t). Le signal vrai s (t) correspond alors à la partie réelle du signal complexe S(t).

Le traitement du signal s(t) peut donc s'effectuer par le double traitement des parties I(t) et Q(t) qu'on notera plus simplement, par la suite, I et Q.

Les processeurs qui traitent de tels signaux reçoivent en général, sur deux entrées distinctes, les signaux I et Q. Ces signaux sont obtenus en multipliant le signal de réception par une onde soit en phase avec la porteuse soit en quadrature avec celle-ci. Les processeurs effectuent ensuite divers traitements selon les modulations exploitées. On trouve ainsi, dans le cas de la modulation différentielle de phase, des traitements qui consistent à former la somme ou la différence de produits d'échantillons retardés ou non, comme par exemple $(I_k I_{k-1} + Q_k Q_{k-1})$ et $Q_k I_{k-1} - I_k Q_{k-1}$ où k désigne le rang d'un échantillon.

La première expression est dite "Dot" et la seconde "Cross" dans la littérature sur ce sujet. Ces appellations viennent de ce que le premier signal est du type "produit intérieur" ou "produit scalaire" entre deux grandeurs, traditionnellement noté par un point ("Dot" en anglais), tandis que le second est du type "produit extérieur" ou "produit vectoriel" traditionnellement noté par une croix ("Cross").

On peut montrer que le produit d'un échantillon de rang k du signal s(t), soit s(k), par l'échantillon antérieur conjugué, soit s*(k-1), produit qui est calculé dans le récepteur pour démoduler le signal (cf multiplieur 24 sur la figure 2), est, à une rotation de phase fixe près, de la forme :

$$Dot(k) + jCross(k).$$

Le signal Dot permet la détermination du déphasage entre deux symboles successifs, alors que les signaux Dot et Cross, considérés ensemble, permettent de déterminer le nombre entier de fois $\pi/2$ du déphasage entre symboles successifs. Ces signaux Dot et Cross permettent donc la démodulation correcte et sans ambiguïté lorsqu'une modulation différentielle de phase a été utilisée à l'émission.

Un récepteur de signaux à étalement de spectre forme donc, d'abord, les parties en phase et en quadrature I et Q et effectue ensuite un filtrage adapté sur chacun de ces signaux. A partir des échantillons obtenus, le récepteur calcule les signaux Dot et Cross et, à partir de là, restitue l'information véhiculée par le signal reçu.

Le document FR-A-2 742 014 décrit un récepteur mettant en oeuvre cette technique. Sur la figure 4 de ce document est représenté un récepteur comprenant deux voies similaires, l'une traitant la partie I en phase et l'autre la partie Q en quadrature. La première voie de traitement numérique de la partie I en phase avec la porteuse, comprend :

    i) des premiers moyens numériques 50(I) aptes à remplir une première fonction de filtrage adapté à la séquence pseudoaléatoire utilisée à l'émission,
    ii) des premiers moyens numériques 60(I) aptes à remplir une première fonction de retard.

Le circuit comprend encore une seconde voie de traitement numérique recevant la seconde partie Q du signal reçu, cette seconde partie étant en quadrature de phase avec la porteuse. Cette seconde voie comprend, comme la première :

    i) des seconds moyens numériques 50(Q) aptes à remplir une seconde fonction de filtrage adapté à ladite séquence pseudoaléatoire,
    ii) des seconds moyens numériques 60(Q) aptes à remplir une fonction de retard.

Le circuit décrit dans ce document comprend encore un circuit de multiplication 70 possédant :

- deux premières entrées, l'une reliée à la sortie des premiers moyens numériques 50(I) de filtrage et recevant un premier signal filtré $I_k$ et l'autre reliée à la sortie des premiers moyens aptes à remplir la fonction de retard 60(I) et recevant un premier signal filtré-retardé $I_{k-1}$,
- deux secondes entrées, l'une reliée à la sortie des seconds moyens numériques 50(Q) de filtrage et recevant un second signal filtré $Q_k$ et l'autre reliée à la sortie des seconds moyens aptes à remplir la fonction retard 60(Q) et recevant un second signal filtré-retardé $Q_{k-1}$,
- des moyens pour calculer les deux produits directs entre signaux filtrés et filtrés-retardés de la première et de la seconde voies à savoir $I_k I_{k-1}$ et $Q_k Q_{k-1}$, et les deux produits croisés entre signal filtré d'une voie et signal filtré-retardé de l'autre voie, à savoir $Q_k I_{k-1}$, et $I_k Q_{k-1}$,
- des moyens pour calculer la somme des produits directs, soit $I_k I_{k-1} + Q_k Q_{k-1}$ et la différence des produits croisés, soit $Q_k I_{k-1} - I_k Q_{k-1}$.

Le circuit décrit dans ce document comprend encore un circuit d'intégration et de régénération d'horloge 80 recevant la somme des produits directs et la différence des produits croisés. Ce circuit comprend encore un moyen numérique de programmation 90 contenant des informations aptes à programmer notamment les premiers et seconds moyens de filtrage 50(I), 50(Q).

Les deux voies comprennent en outre un premier et un second circuits de mise en forme et de sommation 95 (I), 95(Q) disposés devant, respectivement, les premiers et seconds moyens de filtrage 50(I), 50(Q).

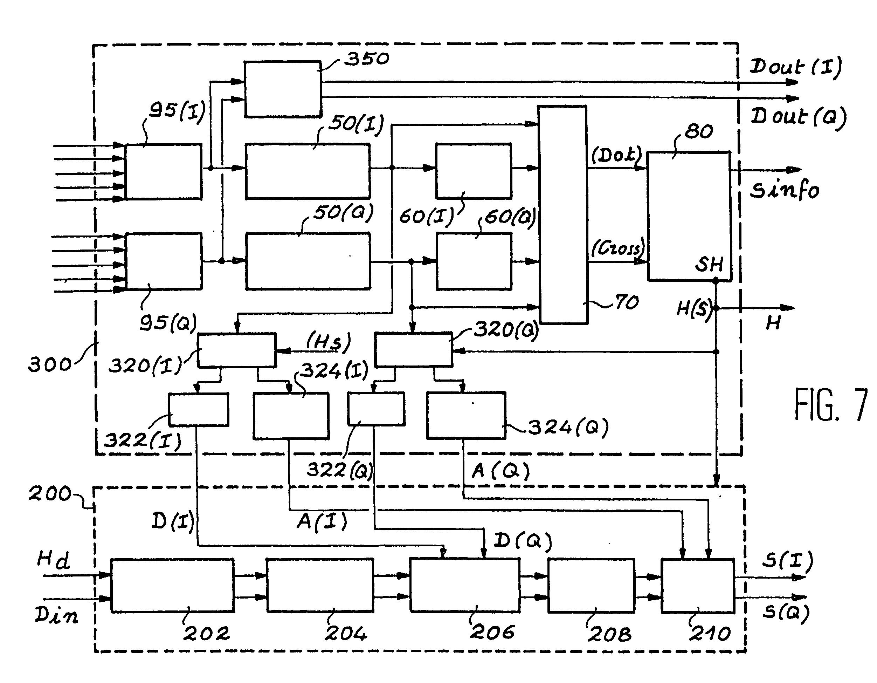

La figure 6 montre un récepteur conforme à l'invention qui reprend certains de ces moyens déjà connus, à savoir : dans chaque voie I et Q, un filtre adapté 50(I), 50(Q), un moyen de retard 60(I), 60(Q), un démodulateur différentiel 70 délivrant les signaux Dot et Cross, un circuit de restitution de données (sur une sortie $S_{info}$) et de restitution de l'horloge-symbole Hs (sur une sortie $S_H$).

Le circuit représenté comprend en outre :

A) des moyens de formation de signaux de commande pour la formation de signaux d'interférences correspondant au bruit d'accès multiple, ces moyens comprenant :

- un premier registre 320(I) relié à la sortie des premiers moyens de filtrage adapté 50(I) de la première voie I et commandé par le signal d'horloge-symbole Hs délivré par le circuit de régénération d'horloge 80, ce premier registre possédant une sortie,
- un second registre 320(Q) relié à la sortie des premiers moyens de filtrage adapté 50(Q) de la seconde voie et commandé par le signal d'horloge-symbole Hs délivré par le circuit de régénération d'horloge 80, ce second registre possédant une sortie,
- un premier détecteur de signe 322(I) relié à la sortie du premier registre 320(I) et délivrant une première donnée D(I) propre à la première voie,
- un second détecteur de signe 322 (Q) relié à la sortie du second registre 320(Q) et délivrant une seconde donnée D(Q) propre à la seconde voie,
- un premier circuit 324(I) de détermination de la valeur absolue A(I) du signal délivré par la sortie du premier registre 320(I),
- un second circuit 324(Q) de détermination de la valeur absolue A(Q) du signal délivré par la sortie du second registre 320(Q),

B) un circuit 200 de formation d'un signal d'interférences correspondant au bruit d'accès multiple comprenant :

- des moyens d'étalement de spectre par séquence pseudo-aléatoire 208, ces moyens étant reliés aux sorties des premier et second détecteurs de signe 322 (I) , 322 (Q) ;
- un circuit d'amplification et d'inversion 210 des signaux délivrés par les moyens d'étalement de spectre 208, ce circuit d'amplification et d'inversion 210 possédant deux entrées de commande de gain reliées respectivement aux sorties des premier et second circuits de détermination de valeur absolue 324(I), 324(Q), ce circuit d'amplification et d'inversion 210 délivrant deux signaux de correction S(I), S(Q) en bande de base.

La figure 7 annexée représente un mode particulier de réalisation du récepteur 300. On y retrouve les deux filtres adaptés 501, 50Q, les deux circuits retards 60(I), 60(Q), le démodulateur différentiel 70, le circuit 80 de calcul de l'horloge-symbole Hs, les deux registres 320I, 320Q, les deux circuits détecteurs de signe 322(I), 322(Q), les deux circuits détecteurs de valeur absolue 324(I), 324(Q) et par ailleurs deux sommateurs 95(I), 95(Q) ainsi qu'un circuit retard 350 qui peut être, en pratique, une mémoire FIFO ("First In-First Out"). Cette mémoire reçoit les deux données en bande de base extraites des sommateurs et les adresse à l'entrée d'un étage suivant sous forme de signaux Dout (I), Dout(Q). En pratique, la mémoire FIFO 350 peut être dédoublée en deux mémoires FIFO, l'une pour les signaux de la voie I, l'autre pour les signaux de la voie Q.

Sur la figure 7 le circuit 200 de génération du signal d'interférences correspondant au bruit d'accès multiple est représenté sous une forme particulière, comme s'il s'agissait d'un émetteur pour transmissions numériques à étalement de spectre. Un tel circuit, considéré en tant que tel, fait l'objet d'une demande de brevet déposée le jour même du dépôt de la présente demande par le présent Demandeur et intitulée "Circuit pour transmissions numériques à étalement de spectre par séquence directe avec génération d'un signal d'interférences". Tel que représenté sur la figure 7, ce circuit comprend :

a) un premier bloc 202 apte à recevoir sur une entrée des données et à les organiser en symboles et à produire sur une sortie un signal d'horloge Hs lié à ces symboles,

b) un deuxième bloc 204 de codage différentiel des symboles délivrés par le premier bloc 202,

c) un troisième bloc 206 de multiplexage comprenant un premier groupe d'entrées reliées au bloc de codage différentiel 204 et un deuxième groupe d'entrée $(E_I, E_Q)$ aptes à recevoir deux données $(D(I), D(Q))$ définissant la polarité du signal de génération d'interférences, ce bloc de multiplexage 206 transmettant l'un ou l'autre des signaux présents sur l'un ou l'autre des deux groupes d'entrée,

d) un quatrième bloc 208, d'étalement, apte à multiplier le signal qu'il reçoit du bloc de multiplexage 206 par une séquence pseudo-aléatoire,

e) un cinquième bloc 210, d'amplification-inversion possédant une entrée de signal reliée au bloc d'étalement et possédant deux entrées de commande $(E(I), E(Q))$ aptes à recevoir deux signaux $(A(I), A(Q))$ de réglage du gain de l'amplification, les sorties de ce cinquième bloc délivrant soit deux signaux amplifiés et inversés $(S(I), S(Q))$ lorsque ce cinquième bloc 210 est actif, soit le signal appliqué à son entrée lorsqu'il est rendu transparent.

Un tel circuit est apte à fonctionner soit en émetteur de signaux différentiels à étalement de spectre par séquence directe lorsque le premier bloc 202, le deuxième bloc 204 et le quatrième bloc 208 sont rendus actifs, le bloc de multiplexage 206 transmettant alors les données provenant du bloc de codage différentiel 204, le cinquième 210 bloc étant rendu transparent, soit en générateur de signal de correction des interférences d'accès multiple lorsque le bloc de multiplexage 206 transmet les données appliquées sur le deuxième groupe d'entrées et lorsque le quatrième bloc 208 et le cinquième bloc 210 sont rendus actifs, le premier bloc 202 et le deuxième bloc 204 étant rendus inactifs.

Les sorties S(I) et S(Q) peuvent être reliées aux entrées des sommateurs d'un étage suivant, lesquels sommateurs reçoivent également les signaux en bande de base retardés délivrés par le moyen à retard 350 (FIFO), ce circuit retardant les données initiales en bande de base afin de les synchroniser avec le signal de correction des interférences.

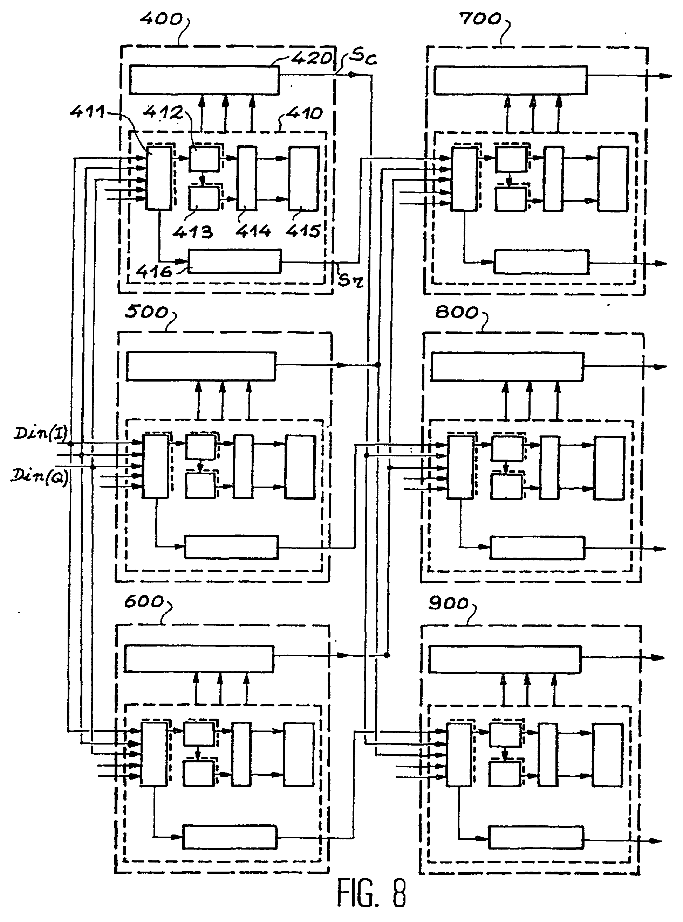

Les circuits de la figure 7 peuvent être intégrés dans un même composant qui contiendra alors l'ensemble des fonctionnalités nécessaires à la mise en oeuvre d'une transmission numérique par étalement de spectre avec correction des interférences d'accès multiple. Il suffit en effet de grouper de tels composants par étages et de mettre ces étages en cascade pour obtenir l'ensemble souhaité. La figure 8 montre ainsi un récepteur fonctionnant avec trois utilisateurs et effectuant une suppression des interférences de type parallèle. Ce circuit est construit avec six composants identiques, trois constituant un premier étage, à savoir les composants 400, 500, 600, les trois autres, à savoir 700, 800, 900, constituant un second étage. Les composants ont tous même structure et comprennent, par exemple pour le composant 400 :

i. un récepteur 410 constitué d'un bloc sommateur 411, de deux corrélateurs 412, 413 à la fois pour la voie I (en traits pleins) et pour la voie Q (en traits interrompus), d'un démodulateur 414 unique pour les deux voies et délivrant les signaux Dot et Cross, d'un circuit de détection de pic et de régénération d'horloge 415, et d'une mémoire FIFO 416,

ii. un générateur de signal d'interférences 420, conforme au schéma de la figure 6.

Le composant 400 a une sortie de correction des interférences Se reliée aux entrées des deux composants 800 et 900 du deuxième étage (pour la correction) alors que la sortie Sr de la mémoire FIFO est reliée à l'entrée du composant 700 du second étage. De même pour les composants 500 et 600, dont les sorties du générateur sont reliées aux entrées des composants (700, 900) (700, 800) et les sorties retardées aux entrées des composants 800 et 900.

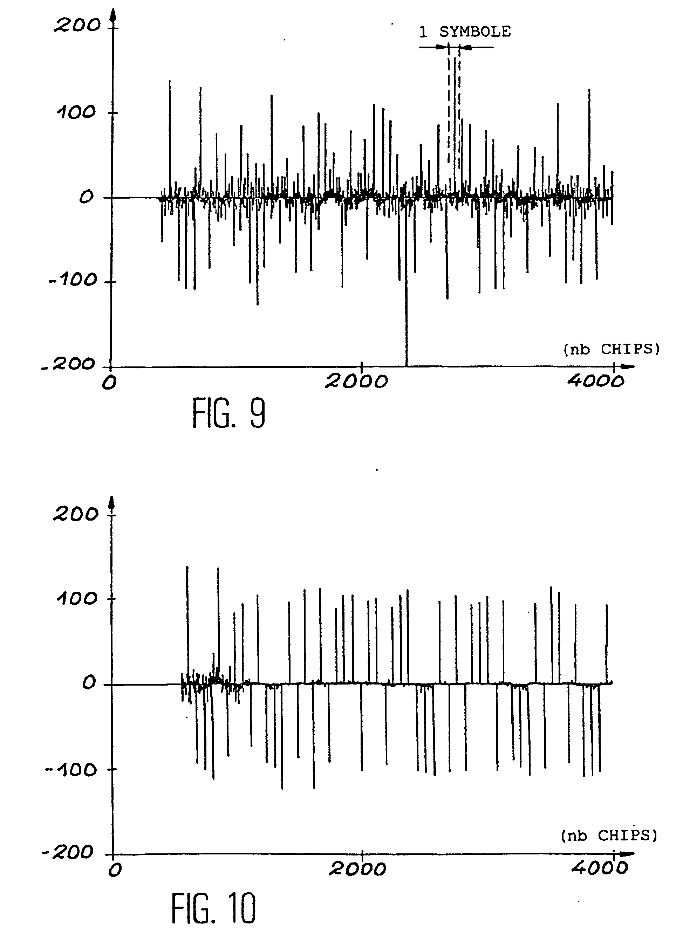

Les figures 9 et 10 illustrent les résultats obtenus avec un tel circuit. La figure 9 montre le signal Dot à la sortie du premier étage (par exemple à la sortie du circuit 414). Un tel signal, d'une manière générale, comprend une suite de pics tantôt positifs, tantôt négatifs, selon la valeur de l'information binaire transmise. L'intervalle entre deux pics consécutifs correspond à la durée Ts d'un symbole. On voit, sur la figure 9, une série de tels pics, mélangés à des pics parasites provenant des interférences avec les deux autres utilisateurs.

Sur la figure 10, on voit le signal Dot du même utilisateur mais pris après le second étage, c'est-à-dire après suppression des interférences. L'amélioration est spectaculaire.

**Revendications**

1. Récepteur différentiel à étalement de spectre par séquence directe, avec moyens mixtes de formation de signaux de commande pour la formation d'un signal d'interférences correspondant à un bruit d'accès multiple, ce récepteur comprenant :

   a) une première voie de traitement d'une première partie (I) du signal reçu, cette première partie étant la partie en phase avec la porteuse reçue, cette première voie comprenant :

   i) des premiers moyens (50(I)) de filtrage adapté correspondant à une séquence pseudoaléatoire particulière, ces premiers moyens délivrant un premier signal filtré ($I_k$),
   ii) des premiers moyens (60(I)) de retard, délivrant un premier signal filtré-retardé ($I_{k-1}$),

   b) une seconde voie de traitement d'une seconde partie (Q) du signal reçu, cette seconde partie étant la partie en quadrature de phase avec la porteuse reçue, cette seconde voie comprenant :

   i) des seconds moyens (50(Q)) de filtrage adapté correspondant à ladite séquence pseudoaléatoire particulière, ces seconds moyens délivrant un second signal filtré ($Q_k$),
   ii) des seconds moyens 60(Q)) de retard, délivrant un second signal filtré-retardé ($Q_{k-1}$),

   c) un circuit de démodulation (70) recevant les premiers signaux filtré et filtré-retardé ($I_k$, $I_{k-1}$) et les seconds signaux filtré et filtré-retardé ($Q_k$, $Q_{k-1}$), ce circuit (70) comprenant des moyens pour calculer un signal "Dot" égal à ($I_k I_{k-1} + Q_k Q_{k-1}$) et un signal "Cross" égal à ($Q_k I_{k-1} - I_k Q_{k-1}$) ,
   d) un circuit (80) d'intégration et de régénération d'horloge symbole (Hs) recevant les signaux "Dot" et "Cross" et délivrant un signal d'horloge symbole (Hs),
   ce récepteur étant **caractérisé par le fait qu'**il comprend en outre :
   e) des moyens mixtes de formation de signaux de commande, ces signaux étant constitués par un signal d'horloge (H) issu du circuit de démodulation et par des données (D(I), D(Q)) et des amplitudes A(I), A(Q)) issues des moyens de filtrage adapté,
   f) un circuit (200) de formation d'un signal d'interférences correspondant au bruit d'accès multiple, ce circuit étant commandé par lesdits signaux de commande (H, D(I), D(Q), A(I), A(Q)),
   lesdits moyens mixtes (e) de formation de signaux de commande comprenant :

   - un premier registre (320(I)) relié à la sortie des premiers moyens de filtrage adapté (50(I)) de la première voie et commandé par le signal d'horloge-symbole (Hs) délivré par le circuit de régénération d'horloge (80), ce premier registre possédant une sortie,
   - un second registre (320(Q)) relié à la sortie des premiers moyens de filtrage adapté (50(Q)) de la seconde voie et commandé par le signal d'horloge-symbole (Hs) délivré par le circuit de régénération d'horloge (80), ce second registre possédant une sortie,
   - un premier détecteur de signe (322(I)) relié à la sortie du premier registre (320(I)) et délivrant une première donnée (D(I)) propre à la première voie,
   - un second détecteur de signe (322(Q)) relié à la sortie du second registre (320(Q)) et délivrant une seconde donnée (D(Q)) propre à la seconde voie,
   - un premier circuit (324(I)) de détermination de la valeur absolue (A(I)) du signal délivré par la sortie du premier registre (320(I)),
   - un second circuit (324(Q)) de détermination de la valeur absolue (A(Q)) du signal délivré par la sortie du second registre (320(Q)),

2. Récepteur selon la revendication 1, dans lequel le circuit (200) de formation d'un signal de d'interférences correspondant au bruit d'accès multiple comprend :

   - des moyens d'étalement de spectre par séquence pseudo-aléatoire (208), ces moyens étant reliés aux sorties des premier et second détecteurs de signe (322 (I)) (322 (Q)) ;
   - un circuit d'amplification et d'inversion (210) des signaux délivrés par les moyens d'étalement de spectre (208), ce circuit d'amplification et d'inversion (210) possédant deux entrées de commande de gain reliées respectivement aux sorties des premier et second circuits de détermination de valeur absolue (324(I)) (324 (Q)), ce circuit d'amplification et d'inversion (210) délivrant deux signaux de correction (S(I)), S(Q)) en bande de base.

**3.** Récepteur selon la revendication 1, comprenant en outre :

- un premier sommateur (95(I)) placé en tête du récepteur (300), avant les premiers moyens de filtrage adapté (50(I)), ce sommateur possédant une entrée recevant la première partie (I) en phase,
- un second sommateur (95(Q)) placé en tête du récepteur (300) avant les seconds moyens de filtrage (50(Q)), ce sommateur possédant une entrée recevant la seconde partie (Q) en quadrature,
- un moyen de retard (350) recevant les signaux délivrés par le premier et le second sommateurs (95(I)) (95(Q)) et délivrant sur deux sorties (Dout(I)) (Dout (Q) ) les signaux correspondants retardés de telle sorte qu'ils soient en synchronisme avec les signaux délivrés par les sorties (S(I), S(Q)) du circuit (200) de formation d'un signal d'interférences d'accès multiple.

**4.** Récepteur différentiel à étalement de spectre par séquence directe avec génération d'un signal d'interférences correspondant au bruit d'accès multiple, **caractérisé en ce qu'**il comprend une pluralité de récepteurs (400, 500, 600, 700, 800, 900) conformes à la revendication 2, ces récepteurs étant groupés en parallèle dans plusieurs étages mis en cascade, les récepteurs d'un même étage (400, 500, 600) (700, 800, 900) travaillant chacun sur une séquence pseudo-aléatoire déterminée, les récepteurs de même rang dans des étages différents (400, 700) (500, 800) (600, 900) travaillant avec la même séquence pseudo-aléatoire, les sorties (S(I), S(Q)) des moyens (200) de formation du signal d'interférences correspondant au bruit d'accès multiple d'un récepteur de rang déterminé d'un étage particulier étant reliées aux entrées des sommateurs (411) des récepteurs de rang différent dans l'étage suivant, les sorties (Dout(I), Dout (Q)) du moyen de retard (350) du récepteur d'un étage particulier étant reliée aux entrées des sommateurs du récepteur de même rang dans l'étage suivant.

**Claims**

**1.** Direct sequence spread spectrum differential receiver with mixed control signal formation means for the formation of an interference signal corresponding to the multiple access noise, said receiver comprising:

a) a first channel for processing a first part (I) of the signal received, said first part being the part in phase with the carrier received, said first channel comprising:

i) first matched filtering means (50(I) corresponding to a particular pseudorandom sequence, said first means supplying a first filtered signal ($I_k$),
ii) first delay means (60(I)) supplying a first delayed, filtered signal ($I_{k-1}$) ,

b) a second processing channel of a second part (Q) of the signal received, said second part being the part in phase quadrature with the carrier received, said second channel comprising:

i) second matched filtering means (50(Q)) corresponding to said particular pseudorandom sequence, said second means supplying a second filtered signal ($Q_k$),
ii) second delay means (60(Q)) supplying a second delayed, filtered signal ($Q_{k-1}$),

c) a demodulation circuit (70) receiving the first filtered and delayed, filtered signals ($I_k$, $I_{k-1}$) and the second filtered and delayed, filtered signals ($Q_k$, $Q_{k-1}$), said circuit (70) comprising means for calculating a Dot signal equal to ($I_k I_{k-1}+Q_k Q_{k-1}$) and a Cross signal equal to ($Q_k I_{k-1}-I_k Q_{k-1}$),
d) a circuit (80) for the integration and regeneration of the clock symbol (Hs) receiving the Dot and Cross signals and supplying a clock symbol signal (Hs),
said receiver being **characterized in that** it also comprises:
e) mixed control signal formation means, said signals being constituted by a clock signal (H) from the demodulation circuit and data (D(I), D(Q)) and amplitudes (A(I), A(Q)) from the matched filtering means,
f) a circuit (200) for the formation of an interference signal corresponding to the multiple access noise, said circuit being controlled by said control signals (H, D(I), D(Q), A(I), A(Q)), said mixed control signal formation means (e) comprising:

- a first register (320(I)) connected to the output of the first matched filtering means (50(I)) of the first channel and controlled by the clock symbol signal (Hs) supplied by the clock regeneration circuit (80), said first register having an output,
- a second register (320(Q)) connected to the output of the first matched filtering means (50(Q)) of the second channel and controlled by the clock symbol signal (Hs) supplied by the clock regeneration circuit (80), said second register having an output,
- a first sign detector (322(I)) connected to the output of the first register (320(I)) and supplying a first data item (D(I)) individual to the first channel,
- a second signal detector (322(Q)) connected to the output of the second register (320(Q)) and supplying a second data item (D(Q)) individual to the second channel,
- a first circuit (324(I)) for the determination of the absolute value (A(I)) of the signal supplied by the output of the first register (320(I)),
- a second circuit (324(Q)) for the determination of the absolute value of the signal (D(Q)) supplied by the output of the second register (320(Q)).

2. Receiver according to claim 1, wherein the circuit (200) for the formation of an interference signal corresponding to the multiple access noise comprises:

- pseudorandom sequence spread spectrum means (208), which are connected to the outputs of the first and second signal detectors (322(1), 322(Q)),
- a circuit (210) for the amplification and inversion of the signals supplied by the spread spectrum means (208), said amplification and inversion circuit (210) having two gain control inputs connected respectively to the outputs of the first and second absolute value determination circuits (324(I), 324(Q)), said amplification and inversion circuit (210) supplying two base band correction signals (S(I), S(Q)).

3. Receiver according to claim 1, also comprising:

- a first adder (95(I)) placed at the top of the receiver (300), upstream of the first matched filtering means (50(I)), said adder having an input receiving the first in phase part (I),
- a second adder (95(Q)) placed at the top of the receiver (300) upstream of the second filtering means (50(Q)), said adder having an input receiving the second in quadrature part (Q),
- a delay means (350) receiving the signals supplied by the first and second adders (95(I), 95(Q)) and supplying on two outputs (Dout(I), Dout(Q)) the corresponding signals delayed in such a way that they are synchronized with the signals supplied by the outputs (S(I), S(Q)) of the multiple access interference signal formation circuit (200).

4. Direct sequence spread spectrum differential receiver with generation of an interference signal corresponding to the multiple access noise, **characterized in that** it comprises a plurality of receivers (400, 500, 600, 700, 800, 900), according to claim 2, said receivers being grouped in parallel in several cascaded stages, the receivers of the same stage (400, 500, 600) (700, 800, 900) each operating on one given pseudorandom sequence, the receivers of the same rank in different stages (400, 700) (500, 800) (600, 900) operating with the same pseudorandom sequence, the outputs (S(I), S(Q)) of the means (200) for forming the interference signal corresponding to the multiple access noise of a receiver of given rank of a particular stage being connected to the inputs of the adders (411) of different rank receivers in the following stage, the outputs (Dout(I), Dout(Q)) of the delay means (350) of the receiver of a particular stage being connected to the inputs of adders of the same rank receiver in the following stage.

**Patentansprüche**

1. Differentieller Direktsequenzspreizspektrumempfänger mit gemischten Einrichtungen zur Erzeugung von Steuersignalen zur Bildung eines einem Mehrfachzugriffsrauschen entsprechenden Interferenzsignals, wobei dieser Empfänger umfasst:

a) einen ersten Verarbeitungskanal eines ersten Teils (I) des empfangenen Signals, wobei dieser erste Teil der Teil ist, der mit dem empfangenen Träger in Phase ist und dieser erste Kanal dabei umfasst:

i) erste einer speziellen ersten Pseudozufallssequenz entsprechende angepasste Filtereinrichtungen (50(I)), wobei diese ersten Einrichtungen ein erstes gefiltertes Signal ($I_k$)liefern,
ii) erste ein erstes gefiltert-verzögertes Signal ($I_{k-1}$)liefernde Verzögerungseinrichtungen (60(I)),

b) einen zweiten Verarbeitungskanal eines zweiten Teils (Q) des empfangenen Signals, wobei dieser zweite Teil der Teil ist, der zu dem empfangenen Träger um 90˚ phasenverschoben ist und dieser zweite Kanal dabei umfasst:

i) zweite einer speziellen ersten Pseudozufallssequenz entsprechende angepasste Filtereinrichtungen (50 (Q)), wobei diese zweiten Einrichtungen ein zweites gefiltertes Signal ($Q_k$) liefern,

ii) zweite ein zweites gefiltert-verzögertes Signal ($Q_{k-1}$)liefernde Verzögerungseinrichtungen (60($Q_{k-1}$)),

c) eine Demodulationsschaltung (70) für den Empfang der ersten gefiltert-verzögerten Signale ($I_k$, $I_{k-1}$) und der zweiten gefiltert-verzögerten Signale ($Q_k$, $Q_{k-1}$), wobei diese Schaltung (70) Einrichtungen zum Berechnen eines "Dot"-Signals gleich ($I_k$, $I_{k-1}$ + $Q_k$, $Q_{k-1}$) und eines "Cross"-Signals gleich ($Q_k$, $I_{k-1}$ + $I_k$, $Q_{k-1}$) umfassen,

d) eine Integrations- und Regenerationsschaltung (80) des Symboltakts (Hs), welche die "Dot"- und "Cross"-Signale empfängt und ein Symboltaktsignal (Hs) liefert,

wobei dieser Empfänger **dadurch gekennzeichnet ist, dass** er außerdem umfasst:

e) gemischte Einrichtungen zur Erzeugung von Steuersignalen, wobei diese Signale durch ein von der Demodulationsschaltung stammendes Taktsignal (H) und durch von den angepassten Filtereinrichtungen stammende Größen (D(I), D(Q) und Amplituden A(I), A(Q) gebildet werden,

f) eine Schaltung (200) zur Bildung eines dem Mehrfachzugriff entsprechenden Interferenzsignals, wobei diese Schaltung gesteuert wird durch die genannten Steuersignale (H, D(I), D(Q), A(I), A(Q)),

wobei die genannten gemischten Einrichtungen (e) zur Bildung von Steuersignalen umfassen:

- ein erstes Register (320(I)), verbunden mit dem Ausgang der ersten angepassten Filtereinrichtungen (50 (I)) des ersten Kanals und gesteuert durch das Symboltaktsignal (Hs), geliefert durch die Taktregenerationsschaltung (80), wobei dieses erste Register einen Ausgang umfasst,

- ein zweites Register (320(Q)), verbunden mit dem Ausgang der ersten angepassten Filtereinrichtungen (50(Q)) des zweiten Kanals und gesteuert durch das Symboltaktsignal (Hs), geliefert durch die Taktregenerationsschaltung (80), wobei dieses zweite Register einen Ausgang umfasst,

- einen ersten Vorzeichendetektor (322(I)), der verbunden ist mit dem Ausgang des ersten Registers (320 (I)) und eine für den ersten Kanal charakteristische erste Größe (D(I)) liefert,

- einen zweiten Vorzeichendetektor (322(Q)), der verbunden ist mit dem Ausgang des zweiten Registers (320(Q)) und eine für den zweiten Kanal charakteristische zweite Größe (D(Q)) liefert,

- eine erste Determinationsschaltung (324(I)) des absoluten Werts (A(I)) des durch den Ausgang des ersten Registers (320(I)) gelieferten Signals,

- eine zweite Determinationsschaltung (324(Q)) des absoluten Werts (A(Q)) des durch den Ausgang des zweiten Registers (320(Q)) gelieferten Signals,

2. Empfänger nach Anspruch 1, bei dem die Schaltung (200) zur Bildung eines dem Mehrfachzugriff entsprechenden Interferenzsignals umfasst:

- Pseudozufallsequenzspreizspektrumeinrichtungen (208), wobei diese Einrichtungen mit den Ausgängen des ersten und zweiten Vorzeichendetektors (322(I)), (322(Q)) verbunden sind,

- eine Verstärkungs- und Inversionsschaltung (210) der durch die Spreizspektrumeinrichtungen (208) gelieferten Signale, wobei diese Verstärkungs- und Inversionsschaltung (210) zwei Verstärkungssteuerungseingänge besitzt, die jeweils mit den Ausgängen der ersten und der zweiten Absolutwert-Determinationsschaltung (324(I)), (324(Q)) verbunden sind und diese Verstärkungs- und Inversionsschaltung (210) zwei Korrektursignale (S(I)), S(Q)) im Basisband liefert.

3. Empfänger nach Anspruch 1, außerdem umfassend:

- einen ersten Summierer (95(I)), angeordnet am Anfang des Empfängers (300), vor den ersten angepassten Filtereinrichtungen (50(I)), wobei dieser Summierer einen Eingang umfasst, der den ersten phasengleichen Teil (I) empfängt,

- einen zweiten Summierer (95(Q)), angeordnet am Anfang des Empfängers (300), vor den zweiten angepassten Filtereinrichtungen (50(Q)), wobei dieser Summierer einen Eingang umfasst, der den zweiten um 90˚ phasenverschobenen Teil (Q) empfängt,

- eine Verzögerungseinrichtung (350), welche die durch den ersten und den zweiten Summierer (95(I)), (95 (Q)) gelieferten Signale empfängt und auf zwei Ausgängen (Dout(I)), (Dout(Q)) die entsprechenden Signale liefert, so verzögert, dass sie synchron sind zu den durch die Ausgänge (S(I)), S(Q)) der Schaltung (200) zur Bildung eines Mehrfachzugriff-Interferenzsignals gelieferten Signalen.

4. Differentieller Direktsequenzspreizspektrumempfänger mit Erzeugung eines einem Mehrfachzugriffsrauschen entsprechenden Interferenzsignals, **dadurch gekennzeichnet, dass** er eine Vielzahl von zu dem Anspruch 2 konformen Empfängern (400, 500, 600, 700, 800, 900) umfasst, wobei diese Empfänger parallel zu einer mehrstufigen Kaskadenschaltung zusammengefasst sind und jeder der Empfänger einer selben Stufe (400, 500, 600) (700, 800, 900) in einer bestimmten Pseudozufallssequenz arbeitet, die Empfänger eines selben Rangs in verschiedenen Stufen (400, 700) (500, 800) (600, 900) mit derselben Pseudozufallsequenz arbeiten, die Ausgänge S(I), S(Q) der Einrichtungen (200) zur Bildung des dem Mehrfachzugriffsrauschen eines Empfängers eines bestimmten Rangs einer speziellen Stufe verbunden sind mit den Eingängen der Summierer (411) der Empfänger eines anderen Rangs in der nächsten Stufe und die Ausgänge (Dout(I)), Dout(Q)) der Verzögerungseinrichtung (350) des Empfängers einer speziellen Stufe verbunden sind mit den Eingängen der Summierer des Empfängers desselben Rangs in der nächsten Stufe.

FIG. 1

FIG. 2

FIG. 3

FIG. 4

FIG. 6

FIG. 5

FIG. 7

FIG. 8

FIG. 9

FIG. 10